Europäisches Patentamt

European Patent Office

Office européen des brevets

(19)

(11) Veröffentlichungsnummer : **0 356 616 B1**

## (12) EUROPÄISCHE PATENTSCHRIFT

(45) Veröffentlichungstag der Patentschrift :
**03.06.92 Patentblatt 92/23**

(51) Int. Cl.⁵ : **F41A 9/76,** F41A 9/82,
F41A 9/09

(21) Anmeldenummer : **89107429.6**

(22) Anmeldetag : **25.04.89**

(54) **Panzerturmmagazin.**

(30) Priorität : **26.07.88 DE 3825292**

(43) Veröffentlichungstag der Anmeldung :
**07.03.90 Patentblatt 90/10**

(45) Bekanntmachung des Hinweises auf die
Patenterteilung :
**03.06.92 Patentblatt 92/23**

(84) Benannte Vertragsstaaten :
**DE FR GB**

(56) Entgegenhaltungen :
**WO-A-86/06826
FR-A- 2 502 767
FR-A- 2 588 371
US-A- 2 382 522
US-A- 2 984 157
US-A- 3 026 662**

(73) Patentinhaber : **Rheinmetall GmbH
Ulmenstrasse 125 Postfach 6609
W-4000 Düsseldorf (DE)**

(72) Erfinder : **Zielinski, Erich
Am Broichgraben 9
W-4000 Düsseldorf 13 (DE)**

EP 0 356 616 B1

## Beschreibung

Die Erfindung betrifft ein Panzerturmmagazin nach dem Oberbegriff des Patentanspruchs 1.

Derartige, aus der DE-PS 19 38 681 bekannte und zweilagig paternosterartig umlaufende Magazine sind durch ihre flache Bauweise bevorzugt für den Einsatz in einem beengten Raum eines Panzerturmes geeignet. Durch den zweilagigen Umlauf ist in zweckmäßiger Weise die Magazinierung und automatische Zuführung einer vorgegebenen Munitionsmenge realisierbar. Aufgrund der nicht mehr vergrößerbaren Magazinlänge stößt jedoch die Aufnahmekapazität des Magazins auf Grenzen.

Aus der DE 31 22 631-A1 ist ein weiteres Umlaufmagazin bekannt, bei dem die Zuführung und die Entnahme von Patronen jedoch nur an einer einzigen Entnahmestelle in der untersten Reihe eines aus wenigstens drei Lagen bestehenden Magazins möglich ist. Der dazu notwendige Fördermechanismus erfordert es, daß bei diesem Magazin zur Erfassung und Förderung der Patronen jeweils auf beiden Magazinseiten zwei parallel nebeneinander angeordnete Kettentriebe und deren Antriebsmittel raumaufwendig anzuordnen sind.

Aus der US-A 2,382,522 ist ein als senkrechter Elevator ausgebildetes, raumaufwendiges Zusatzmagazin bekannt, das vor einem hinteren Turmmagazin angeordnet ist. Die Munition ist in diesem Zusatzmagazin in entgegengesetzter Richtung zu der im Turmmagazin befindlichen Munition gelagert, so daß durch einen ebenfalls raumaufwendigen und seitlich neben dem Turmmagazin angeordneten Transferarm die Munition des Zusatzmagazins zur Übergabe in das Turmmagazin unter Durchführung einer raumverzehrenden großen Schwenkbewegung um ca. 180° geschwenkt werden muß.

Aufgabe der Erfindung ist es, das nach den Merkmalen des Oberbegriffs des Patentanspruchs 1 bekannte Panzerturmmagazin derartig zu erweitern, daß einerseits Breiten- und Längenveränderungen am Magazin vermieden werden, andererseits jedoch sichergestellt ist, daß zur Gewährleistung einer automatischen Betriebsweise des Panzerturmmagazins unmittelbar leere Munitionsbehälter automatisch gegen volle zwischen der Magazinerweiterung und dem Turmhauptmagazin ausgetauscht werden.

Gelöst wird diese Aufgabe durch die im kennzeichnenden Teil des Patentanspruchs 1 angegebenen Merkmale. Vorteilhafte Ausgestaltungen und Weiterbildungen der Erfindung gehen aus den Merkmalen der Unteransprüche hervor.

Durch die erfindungsgemäße Anordnung eines Zusatzmagazins unter- oder oberhalb eines bekannten, im Panzerturm paternosterartig umlaufenden Hauptmagazins und einer um eine Achse schwenkbaren Übergabevorrichtung läßt sich auf direktem Wege ein leerer Munitionsbehälter des umlaufenden Hauptmagazins in das Zusatzmagazin und beim Zurückschwenken der Übergabevorrichtung ein voller Munitionsbehälter aus dem Zusatzmagazin in das Hauptmagazin befördern, wobei die umgekehrte Förderrichtung auch möglich ist. Die erfindungsgemäße Anordnung gestattet somit einerseits die Gewährleistung einer automatischen Munitionszuführung und andererseits durch die Magazinerweiterung eine wesentliche Erhöhung der Munitionsaufnahmekapazität. Durch die Anordnung des Zusatzmagazins unter- und oberhalb des bekannten umlaufenden Hauptmagazins können ohne die Längen- und Breitenabmessungen des Hauptmagazins und somit des Turmes zu verändern, vorhandene Freiräume in der Turmhöhe genutzt werden.

Die Übergabevorrichtung enthält für den Auswechselvorgang der Munitionsbehälter von dem einen in das andere Magazin um eine Achse schwenkbare und an den Munitionsbehältern befestigte Drehzapfen erfaßbare Transporthebel, die zur direkten Aufnahme der Drehzapfen jeweils eine Gabel enthalten und jedes einem Drehzapfen zugeordnete Kettenglied der Transportkette zur einfachen Übergabe, Aufnahme und Sicherung der Behälter eine Kettenlasche mit einer Sicherungsklinke enthält.

Die Übergabevorrichtung besteht im wesentlichen aus den zwei über ein zwischen den Magazinen angeordnetes Joch miteinander verbundenen Transporthebeln , die nach einer vorteilhaften Ausführungsvariante durch einen Schlitten in Magazinlängsrichtung verfahrbar sind, oder nach einer anderen Ausführungsvariante stationär angeordnet sind. Die Verschiebbarkeit der Übergabeinrichtung durch den Schlitten gestattet die vorteilhafte Anordnung eines einfachen einreihigen statischen Zusatzmagazins, in dem die Munitionsbehälter nicht querverschoben werden. Dieses Magazin ist besonderen Gegebenenheiten anpaßbar. Beispielsweise wird durch Weglassen eines Behälters auf einfache Weise Raum für die Anordnung eines Ansetzmechanismus geschaffen. Bei dieser Ausführungsvariante werden nicht die gesamten Munitionsbehälter, einschließlich der im Zusatzmagazin gelagerten Behälter, sondern nur die Behälter des Hauptmagazins in Umlauf gesetzt, so daß der Ladevorgang vergleichsweise schnell ablaufen kann.

Nach einem weiteren Ausführungsbeispiel wird einer stationär gelagerten Übergabevorrichtung ein umlaufendes, zweilagiges Zusatzmagazin zugeordnet. Bei dieser Ausführungsvariante werden die Munitionsbehälter des Zusatzmagazins durch den automatischen Umlauf bewegt, so daß der die Hebelarme tragende Schlitten hier entbehrlich ist.

Die Erfindung wird anhand zweier, in den Zeichnungen dargestellten Ausführungsbeispiele näher erläutert.

Es zeigen:

Fig. 1 eine Längsansicht eines zweilagigen Umlaufmagazins und eines statischen Zusatzmagazins mit einer Übergabevorrichtung;

Figur 2 eine Längsansicht eines zweilagig umlaufenden Haupt- und Zusatzmagazins mit einer Übergabevorrichtung;

Figur 3 einen in der Figur 1 mit III-III gekennzeichneten Querschnitt;

Figur 4 eine in der Figur 3 mit IV gekennzeichnete Einzelheit;

Figuren 5-8 verschiedene Bewegungsschritte für die Zuführung und Entnahme des Munitionsbehälters durch die Übergabevorrichtung aus einer in der Figur 4 mit V gekennzeichneten Richtung.

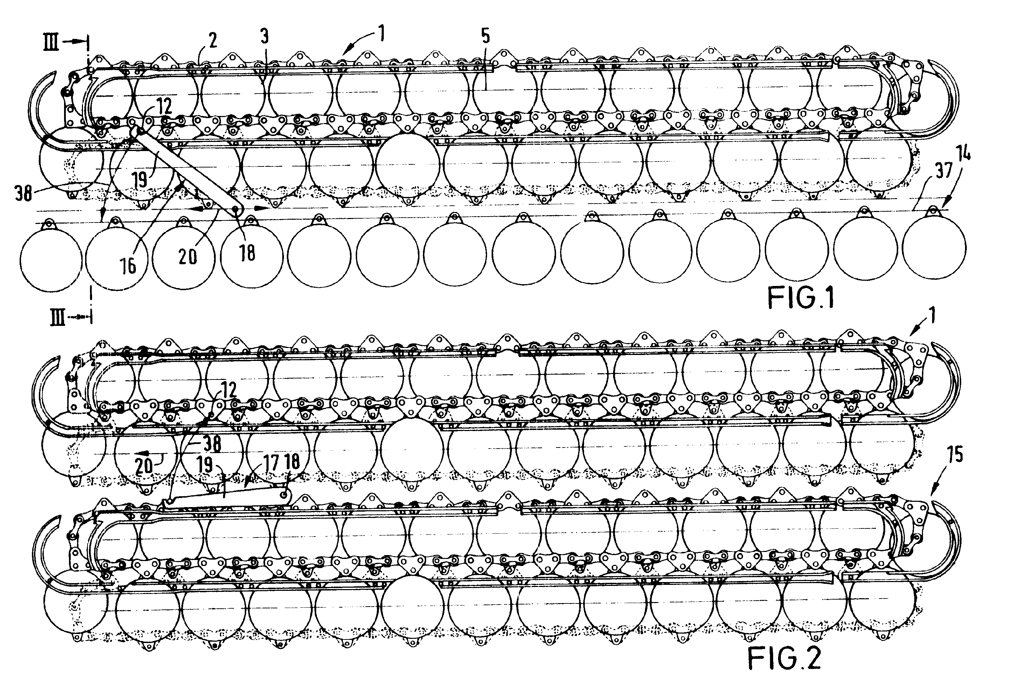

Die Figuren 1 und 2 verdeutlichen die Anordnung eines bekannten Panzerturmmagazins 1, nachfolgend auch Hauptmagazin genannt, und ein darunter angeordnetes Zusatzmagazin 14, 15 sowie für einen Auswechselvorgang, der in diesen Magazinen 1, 14, 15 befindlichen Munitionsbehälter 3, eine zwischen den Magazinen 1, 14, 15 gelagerte und mit ihren Transporthebeln 19 um eine Achse 18 schwenkbare Übergabevorrichtung 16, 17.

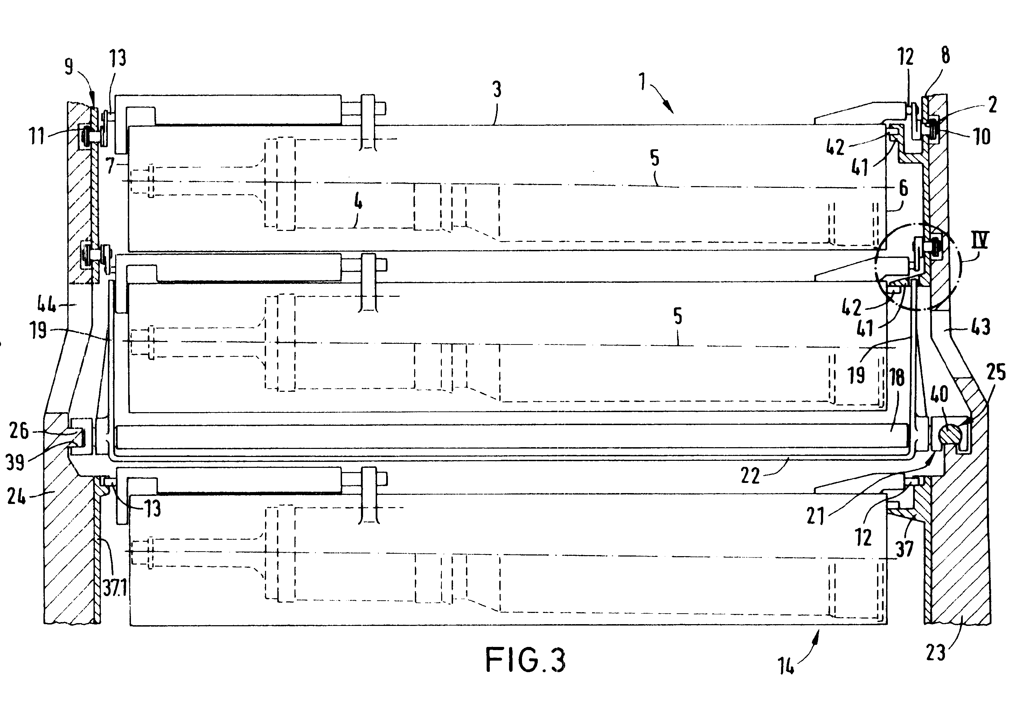

Das Hauptmagazin 1 trägt in einer endlosen umlaufenden Bahn 2 parallel zueinander sowie zu einer nicht dargestellten Seelenachse eines Geschützrohres parallel angeordnete Munitionsbehälter 3, die zur Aufnahme und Zuführung von Munition 4 (Figur 3) röhrenförmig ausgebildet sind. Die Munitionsbehälter 3 liegen in waagerechten Ebenen 5 übereinander und laufen quer hinter einer großkalibrigen Rohrwaffe in einem Panzerturm um. Eine derartige Anordnung ist aus der DE-PS 19 38 681 bereits ersichtlich, so daß eine nochmalige zeichnerische Darstellung entbehrlich ist. Die Munitionsbehälter 3 sind an ihren beidseitigen Stirnseiten 6, 7 (Figur 3) mit in Führungen 8, 9 geführten Transportketten 10, 11 (Figur 3) über gegenüberliegend angeordnete Drehzapfen 12, 13 (Figur 3) verbunden.

Das in der Figur 1 dargestellte Zusatzmagazin 14 ist ein einseitiges statisches Magazin, in dem die Behälter 3 auf einer in der Figur 3 näher dargestellten Schiene 37 oder in nicht dargestellten Einzelhalterungen aufhängbar gelagert sind. Bei diesem Magazin 14 muß ein Lagerplatz eines Munitionsbehälters 3 als Leerstelle vorhanden sein, in die der erste leergewordene Munitionsbehälter 3 des Hauptmagazins 1 abgelegt werden kann.

Unter besonderen Gegebenheiten bietet wenigstens eine Leerstelle dieses Magazin 14 auch die Möglichkeit, einen nicht dargestellten Ansetzmechanismus unterzubringen.

In der Figur 2 ist als Zusatzmagazin 15 ein dem Hauptmagazin 1 entsprechendes zweireihiges und endlos umlaufendes Magazin dargestellt.

Während die Übergabevorrichtung 16 für eine beliebige Munitionsbehälterentnahme an dem statischen Zusatzmagazin 14 quer zur Munitionslage in Magazinlängsrichtung 20 über einen in der Figur 3 näher dargestellten Schlitten 21 durch einen nicht dargestellten Verschiebeantrieb bewegt werden muß, kann beim Einsatz des umlaufenden Zusatzmagazins 15 der Schlitten 21 entfallen, weil die Behälter 3 automatisch durch den Umlauf in Längsrichtung 20 bewegt werden. In der Figur 2 sind deshalb die Transporthebel 19 der Übergabevorrichtung 17 in Magazinlängsrichtung 20 unbeweglich starr an der Achse 18 gelagert.

Bei den in den Figuren 1 und 2 dargestellten Ausführungsbeispielen bilden die Transporthebel 19, 20 über ein zwischen den beiden Magazinen 1, 14 oder 15 angeordnetes Joch 22 (Figur 3) eine starre Einheit.

Die Figur 3 verdeutlicht insbesondere die Anordnung einer Übergabevorrichtung 16, mit einem in Magazinlängsrichtung 20 - also quer zur Bewegungsrichtung der Magazine 1, 14 verschiebbaren Schlitten 21, an dem die über das Joch 22 verbundenen Transporthebel 19, 20 über die Achse 18 schwenkbar gelagert sind.

Der Schlitten 21 ist auf der einen Magazinseite in einer Rundführung 25 und auf der anderen Seite in einer Stützschiene 26 geführt, wobei die Rundführung 25 und die Stützschiene 26 in der jeweils benachbarten Magazinwand 23, 24 angeordnet sind.

Die Rundführung 25 enthält einen im wesentlichen kreisförmigen Querschnitt 40 und ist zur nicht dargestellten Befestigung an der Magazinwand 23 im unteren Bereich abgeflacht. Der kreisförmige Führungsteil wird von der zugehörigen Schlittenhälfte umschlossen, wodurch eine Führung des Schittens 21 in Höhen- und Seitenrichtung gewährleistet ist. Die andere Hälfte des Schlittens 21 enthält eine seitliche Führungsnut 39, die zur Höhenfixierung die an der anderen Magazinwand 24 befestigte und rechtekkig ausgebildete Stützschiene 26 umfaßt.

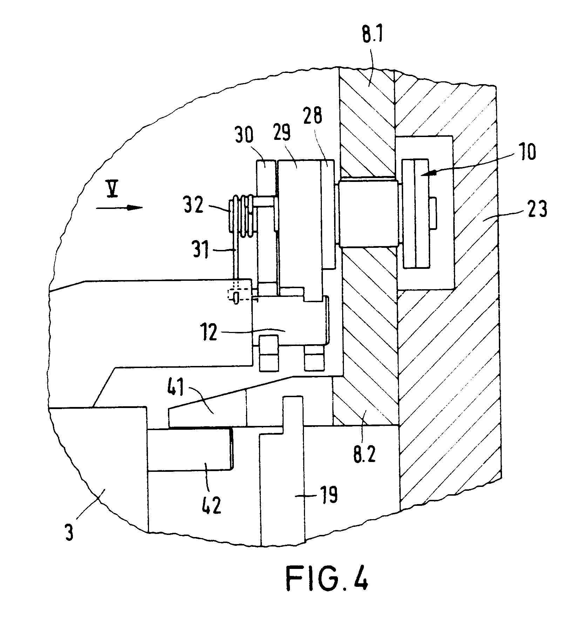

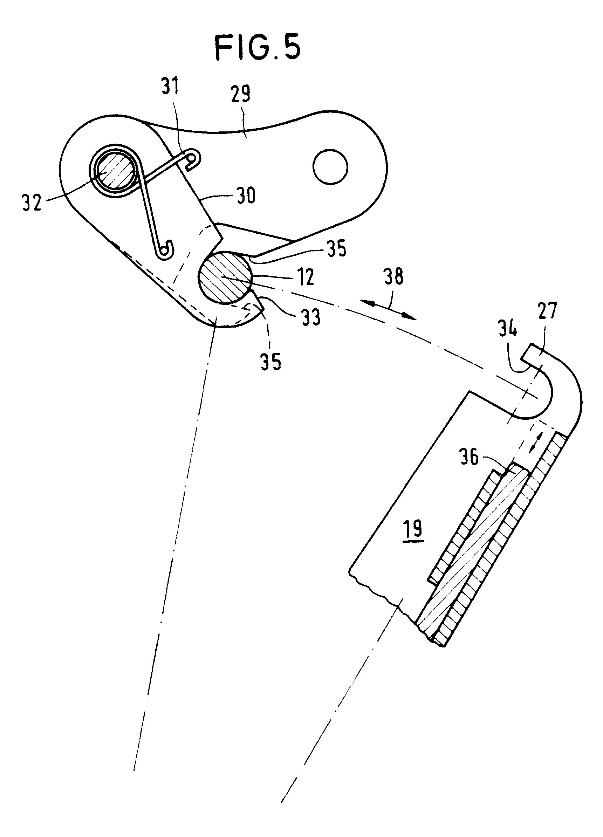

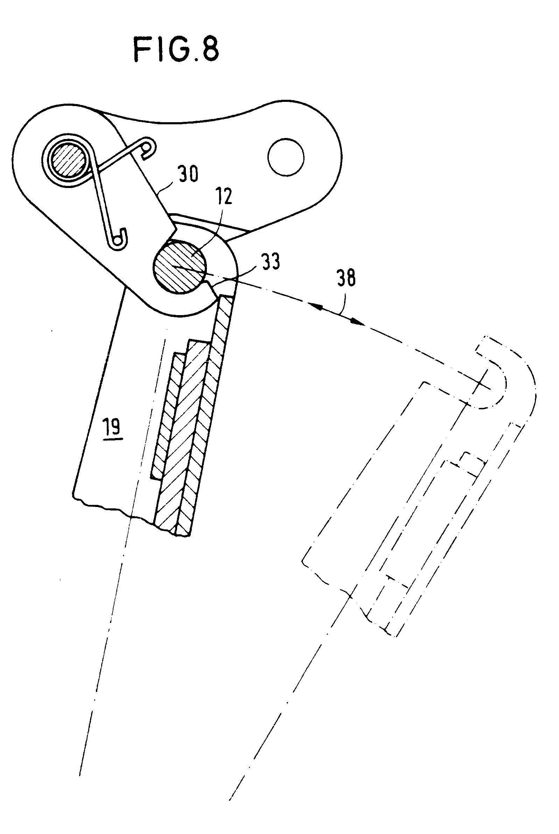

Entsprechend den Figuren 4 bis 8 ist zur Aufnahme der an jedem Behälter 3 befindlichen Drehzapfen 12, 13 jeder der beiden Transporthebel 19 mit einer in den Figuren 5 bis 8 näher dargestellten Gabel 27 und jedes einem Drehzapfen 12, 13 zugeordnetes Kettenglied 28 der Transportkette 10, 11 mit einer ebenfalls in den Figuren 5 bis 8 näher dargestellten Kettenlasche 29 und einer Sicherungsklinke 30 ausgerüstet.

Zur Aufnahme eines Drehzapfens 12, 13 ist dabei jede Sicherungsklinke 30 gegen die Kraft einer Torsionsfeder 31 um eine Kettengliedachse 32 aufschwenkbar gelagert und enthält eine den Drehzapfen 12, 13 auf der von der Kettenlasche 29 abgewandten Seite umschließbare Sicherungsnase 33. Demgegenüber enthalten

3

die Kettenlasche 29 und die Gabel 27 jeweils zueinander weisende und in der Schwenkrichtung 38 der Gabel 27 verlaufende Aufnahmeöffnungen 34, 35.

Zur Einführung und Entnahme des Drehzapfens 12, 13 aus der Öffnung der Sicherungsnase 33 enhält der Transporthebel 19 einen längsverschieblichen Anschlag 36. Dadurch ist es möglich, die Sicherungsnase 33 der Sicherungsklinke 30 wegzuschwenken und solange geöffnet zu halten, bis das die Drehzapfen 12, 13 der Munitionsbehälter 3 aus der Sicherungsposition der Klinke 30 und der Halteposition der Kettenlasche 29, bedingt durch die Schwerkraft der Munitionsbehälter 3, in die Aufnahmeöffnung 34 der Gabel 27 gleiten. Die Neigung des Transporthebels 19 ist dabei so gewählt, daß auch bei einer maximalen Turmschräglage eine sichere Munitionsübergabe gewährleistet ist.

Die Figur 5 verdeutlicht dazu einen in der Aufnahmeöffnung 35 der Kettenlasche 29 aufgenommenen und von der Sicherungsnase 33 der Sicherungsklinke 30 gehaltenen Drehzapfen 12 eines in der Figur 4 dargestellten Munitionsbehälters 3. Die Nase 33 der durch die Torsionsfeder 31 beaufschlagten Sicherungsklinke 30 wirkt dabei als Sperrriegel gegen ein Herausgleiten des Drehzapfens 12.

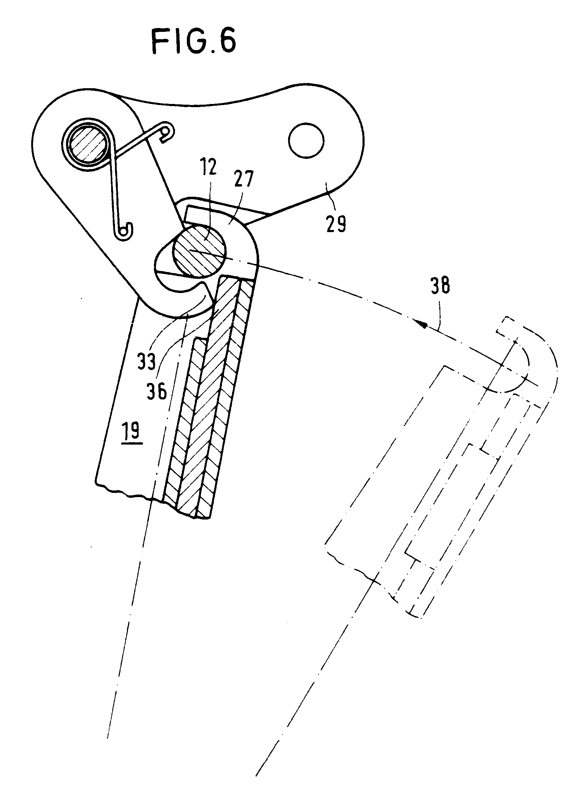

Die Figur 6 zeigt die Entnahme des Drehzapfens 12 aus der Kettenlasche 29 und aus der Sicherungsklinke 30 durch die Gabel 27 des Transporthebels 19. Dazu wird der Transporthebel 19 durch einen nicht dargestellten motorischen oder zylindrischen Antrieb in Schwenkrichtung 38 um die Achse 18 (Figur 3) bewegt. Bevor der Transporthebel 19, zur Kettenlasche 29 schwenkt, wird der längsverschiebliche Anschlag 36 hinter die Aufnahmeöffnung 34 der Gabel 27 auf nicht dargestellte Weise herausgefahren. Bei der Annäherung der Gabel 27 an die Aufnahmeöffnung 35 der Kettenlasche 29 drückt der Anschlag 36 die Sicherungsnase 33, zur Überleitung des Drehzapfens 12 in die Gabel 27, in die dargestellte Öffnungsposition.

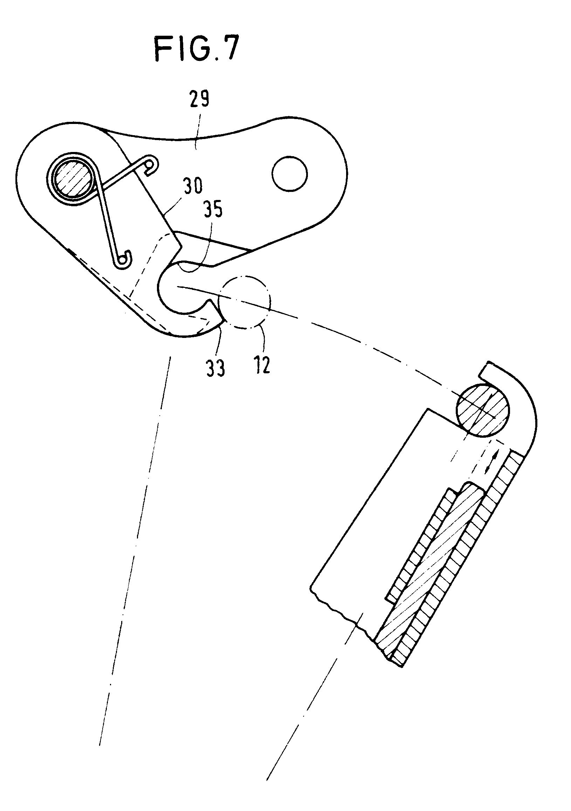

Die Figur 7 zeigt den Transporthebel 19 des Munitionsbehälters 3 auf dem Weg zur Kettenlasche 29 der Transportkette 10. Bei dieser Betriebsweise wird die Sicherungsnase 33 der Sicherungsklinke 30 durch den ankommenden Drehzapfen 12 geöffnet. Die strichpunktierte Stellung des Drehzapfens 12 zeigt, an welcher Stelle der Drehzapfen 12 die Sicherungsnase 33 von außen in die Öffnungsstellung bewegt.

Aus der 8 geht schließlich hervor, daß der in zurückgezogener Stellung befindliche Anschlag 36 des Transporthebels 19 es zuläßt, daß die Sicherungsnase 33 der Sicherungsklinke 30 den Drehzapfen 12 selbsttätig umschließt und festhält.

Die Kettenlasche 29 mit der Sicherungsklinke 30 sind nach den Figuren 3 und 4 an einem Kettenglied 28 der Transportkette 10 befestigt, die zwischen zwei an jeder Magazinwand 23, 24 befestigten Führungsschienen 8.1, 8.2 läuft. Die untere Führungsschiene 8.2 ist dabei mit einer abgewinkelten Führung 41 versehen, wodurch ein auf jeder Munitionsbehälterseite angeordneter Lageführungsbolzen 42 den Munitionsbehälter 3 gegen eine Drehung um den Drehzapfen 12 schützt.

Dadurch, daß entsprechend der Figur 3 jeweils die Ablageschiene 37, 37.1 des Zusatzmagazins 14 an den gleichen Magazinwänden 23, 24 unterhalb des Hauptmagazins 1 angeordnet sind, läßt sich in raumsparender Weise ein schnellere und direkter Austausch der Munitionsbehälter 3 zwischen einer beliebigen Position in der unteren Ebene 5 des Hauptmagazins 1 und einer Leerstelle im Zusatzmagazin 14 erzielen. Die in der Figur 4 dargestellten Magazinwände 23, 24 enthalten des weiteren für den Ladevorgang Öffnungen 43, 44, insbesondere für einen nicht dargestellten Ansetzer und für den Einschub der Munition in das nicht dargestellte Waffenrohr.

Die vorbeschriebene Anordnung des Zusatzmagazins 14, 15 und die Anordnung der Übergabevorrichtung 16 lassen sich in nicht dargestellter jedoch analoger Weise auch oberhalb des Hauptmagazins anordnen.

## Patentansprüche

1. Panzerturmmagazin (1) mit in einer endlosen Bahn (2) umlaufenden und aus parallel zueinander sowie zur Seelenachse des Geschützrohres angeordneten röhrenförmigen Munitionsbehältern (3) zur Aufnahme und Zuführung von Munition (4), wobei die Munitionsbehälter (3) in übereinanderliegenden waagerechten Ebenen quer zur Seelenachse hinter einem Geschütz umlaufen und dazu an ihren beidseitigen Stirnseiten (6, 7) mit in Führungen (8, 9) geführten Transportketten (10, 11) über Drehzapfen (12, 13) verbunden sind, **dadurch gekennzeichnet**, daß zum Auswechseln der Munitionsbehälter (3) unter- oder oberhalb des bekannten Panzerturmmagazins (1) ein den Längen- und Breitenabmessungen des Hauptmagazins entsprechendes Zusatzmagazin (14, 15) und zwischen dem Turmmagazin (1) und diesem Zusatzmagazin (14, 15) eine Übergabevorrichtung (16, 17) angeordnet ist, wobei die Übergabevorrichtung (16, 17) für den Auswechselvorgang der Munitionsbehälter (3) von dem einen in das andere Magazin (1, 14, 15) um eine Achse (18) schwenkbare und die Drehzapfen (12, 13) erfaßbare Transporthebel (19) enthält, welche zur direkten Aufnahme der an jedem Behälter (3) befindlichen Drehzapfen (12, 13) jeweils eine Gabel (27) enthalten und jedes einem Drehzapfen (12, 13) zugeordnete Kettenglied (28) der Transportkette (10, 11) zur Übergabe, Aufnahme und Siche-

4

rung der Behälter eine Kettenlasche mit einer Sicherungsklinke (30) enthält.

2. Magazin nach Anspruch 1, **dadurch gekennzeichnet**, daß die Übergabevorrichtung (16) einen in Längsrichtung (20) der Magazine (1, 14) verschieblichen Schlitten (21) enthält, mit dem die Transporthebel (19, 20) über die Achse (18) verbunden sind, wobei die Transporthebel (19, 20) über ein zwischen den beiden Magazinen (1, 14) angeordnetes Joch (22) eine starre Einheit bilden.

3. Magazin nach Anspruch 1 und 2, **dadurch gekennzeichnet,** daß der Schlitten (21) auf der einen Seite in einer Rundführung (25) und auf der anderen Seite in einer Stützschiene (26) geführt ist, wobei die Rundführung (25) und die Stützschiene (26) in der jeweils zugeordneten Magazinwand (23, 24) angeordnet sind.

4. Magazin nach einem der Ansprüche 1 bis 3, **dadurch gekennzeichnet**, daß jede Sicherungsklinke (30) zur Aufnahme eines Drehzapfens (12, 13) gegen die Kraft einer Torsionsfeder (31) um eine Kettengliedachse (32) aufschwenkbar gelagert ist und eine den Drehzapfen (12, 13) auf der von der Kettenlasche (29) abgewandten Seite umschließbare Sicherungsnase (33) aufweist, während die Kettenlasche (29) und die Gabel (27) jeweils zueinander weisende und in der Schwenkrichtung (38) der Gabel (27) verlaufende Aufnahmeöffnungen (34, 35) aufweisen.

5. Magazin nach einem der Ansprüche 1 bis 4, **dadurch gekennzeichnet**, daß der Transporthebel (29) zur Einführung und Entnahme des Drehzapfens (12, 13) aus der Öffnung der Sicherungsnase (33) einen längsverschieblichen Anschlag (36) zum Wegschwenken der Sicherungsnase (33) enthält.

6. Magazin nach Anspruch 1 und 2, **dadurch gekennzeichnet**, daß das Zusatzmagazin (14) ein einreihiges statisches Magazin ist, in dem die Behälter (3) auf einer Schiene (37) aufhängbar gelagert sind.

7. Magazin nach einem der Ansprüche 1 bis 6, **dadurch gekennzeichnet**, daß der längsverschiebliche Schlitten (21) dem statischen Magazin (14) zugeordnet ist.

8. Magazin nach Anspruch 1, **dadurch gekennzeichnet**, daß das Zusatzmagazin (15) als zweireihiges endlos umlaufendes Magazin ausgebildet ist.

9. Magazin nach Anspruch 1 und 8, **dadurch gekennzeichnet**, daß beim Einsatz eines zweireihigen umlaufenden Zusatzmagazins (15) die Achse (18) des Transporthebels (19) in Längsrichtung (20) des Magazins (1, 15) unbeweglich starr befestigt ist.

## Claims

1. Magazine (1) for the turret of a tank, the magazine having tubular ammunition containers (3), which move in an endless path (2) and which are arranged parallel to one another as well as to the axis of the gun barrel bore, the containers serving to accommodate ammunition (4) and feed same into position, the ammunition containers (3) moving behind the gun in horizontal planes one above the other transverse to the barrel bore axis and being connected for this purpose by two end faces (6,7) through pivots (12,13) with transport chains (10,11) moving in guides (8,9), characterised by the fact that for the purpose of changing the ammunition containers (3) an additional magazine (14,15) corresponding to the length and width of the main magazine is provided underneath or above the known tank turret magazine, a transfer device (16,17) being provided between the turret magazine (1) and the said additional magazine (14,15), the transfer device (16,17) containing, for the operation of changing the ammunition containers (3) from one magazine to the other (1,14,15), transport levers (19) which are pivotable about a shaft (18) and which can grip the pivots (12,13) and which comprise a fork (27) for the direct reception of the pivots (12,13) mounted on each container, while each chain link (28) associated with a pivot (12,13) of the transport chain (10,11) contains a plate with a securing catch (30) for transferring, receiving and securing the containers.

2. Magazine in accordance with Claim 1, characterised by the fact that the transfer device (16) contains a slide (21) which is displaceable in the longitudinal direction (20) of the magazines (1,14) and to which the transport levers (19,20) are connected via the shaft (18), the transport levers (19,20) forming a rigid unit via a yoke (22) positioned between the two magazines (1,14).

3. Magazine in accordance with Claims 1 and 2, characterised by the fact that the slide (21) is guided on one side in a round guide (25) and on the other side in a supporting bar (26), the round guide (25) and the supporting bar (26) being positioned in the respective walls (23,24) of the magazine.

4. Magazine in accordance with one of Claims 1 to 3, characterised by the fact that each securing catch (30), for the reception of a pivot (12,13), is mounted so that it can be pivoted up around a chain link shaft (32) in opposition to the force of a torsion spring (31) and has a securing lug (33) which can enclose the pivot (12,13) on the side facing away from the chain link plate (29) while the chain link plate (29) and the fork (27) have reception apertures (34,35) facing towards each other and extending in the pivoting direction (38) of the fork (27).

5. Magazine in accordance with one of Claims 1 to 4, characterised by the fact that the transport lever (29), for the introduction and withdrawal of the pivot (12,13) from the aperture of the securing lug (33), contains a longitudinally displaceable stop (36) to enable the securing lug (33) to be pivoted out of the way.

6. Magazine in accordance with Claims 1 and 2, characterised by the fact that the additional magazine (14) is a single-row static magazine in which the container (3) is suspended from a bar (37).

7. Magazine in accordance with one of Claims 1 to 6, characterised by the fact that the longitudinally displaceable slide (21) is associated with the static magazine (14).

8. Magazine in accordance with Claim 1, characterised by the fact that the additional magazine (15) is constructed as an endlessly circulating double-row magazine.

9. Magazine in accordance with Claims 1 and 8, characterised by the fact that in the event of the use of a circulating double-row additional magazine (15) the shaft (18) of the transport lever (19) is rigidly secured in such a way that it is immovable in the longitudinal direction (20) of the magazine (1,15).


**Revendications**

1. Chargeur pour arme en tourelle, avec des logements à munition (3), tubulaires, disposées en formant une bande sans fin (2) circulante, en étant placés parallèlement les uns aux autres ainsi qu'à l'axe de l'âme du tube de tir, pour loger et amener une munition (4), les logements à munition (3) circulant dans des plans horizontaux superposés, transversalement à l'axe d'âme, derrière un canon, et étant de plus reliés par leurs faces frontales (6,7), des deux côtés, par l'intermédiaire de tourillons de pivotement (12,13), à l'aide de chaînes de transport (10,11) guidées dans des guidages (8,9), caractérisé en ce que, pour procéder à l'échange des logements à munition (3), il est disposé, au-dessous et au-dessus du chargeur de tourelle de blindé (1) connu, un chargeur d'appoint (14,15) correspondant en longueur et en largeur au chargeur principal, et, entre le chargeur de tourelle (1) et ce chargeur d'appoint (14,15), est disposé un dispositif de transfert (16,17), ce dernier comportant, pour effectuer le processus d'échange des logements de munition (16,17), d'un chargeur dans l'autre (1,14,15), des leviers de transfert (19) pivotant autour d'un axe (18) pouvant saisir les tourillons de pivotement (12,13), leviers de transfert contenant chacun une fourche (27), pour recevoir directement le tourillon de pivotement (12,13) se trouvant sur chaque logement (3), et chaque maillon de chaîne (28), associé à un tourillon de pivotement (12,13), de la chaîne de transfert (10,11), contenant une attache de chaîne avec un cliquet de sécurité (30) pour présenter, recevoir et fixer les logements.

2. Chargeur selon la revendication 1, caractérisé en ce que le dispositif de transfert (16) contient un chariot (21) mobile en direction longitudinale (20) des chargeurs (1,14), auquel les leviers de transfert (19,20) sont reliés par l'intermédiaire de l'axe (18), les leviers de transfert (19,20) formant un ensemble rigide, par l'intermédiaire d'un mandrin (22) disposé entre les deux chargeurs (1,14).

3. Chargeur selon les revendications 1 et 2, caractérisé en ce que le chariot (21) est guidé, d'un côté, dans un guidage rond (25) et, de l'autre côté, dans un rail d'appui (26), le guidage rond (25) et le rail d'appui (26) étant disposés dans chaque paroi de chargeur (23,24) associée.

4. Chargeur selon l'une des revendications 1 à 4, caractérisé en ce que chaque cliquet de sécurité (30) peut être ouvert par pivotement autour d'un axe de maillon de chaîne (32), contre la force d'un ressort de torsion (31), pour recevoir un tourillon de pivotement (12,13), et présente un ergot de sécurité (33) pouvant entourer le tourillon tournant (12,13) du côté opposé à l'attache de chaîne (29), tandis que l'attache de chaîne (29) et la fourche (27) présentent chacun des ouvertures de réception (34,35) tournées les unes vers les autres et s'étendant dans la direction de pivotement (38) de la fourche (27).

5. Chargeur selon l'une des revendications 1 à 3, caractérisé en ce que le levier de transfert (29) contient une butée (36) déplaçable longitudinalement, pour éloigner par pivotement l'ergot de sécurité (33), en vue d'introduire et de prélever le tourillon de pivotement (12,13) hors de l'ouverture de l'ergot de sécurité (33).

6. Chargeur selon les revendications 1 et 2, caractérisé en ce que le chargeur d'appoint (14) est un chargeur statique à une rangée, dans lequel les logements (3) sont montés en étant susceptibles d'être accrochés sur un rail (37).

7. Chargeur selon l'une des revendications 1 à 6, caractérisé en ce que le chariot déplaçable longitudinalement (21) est associé au chargeur statique (14).

8. Chargeur selon la revendication 1, caractérisé en ce que le chargeur d'appoint (15) est réalisé sous la forme d'un chargeur à circulation sans fin, à deux rangées.

9. Chargeur selon les revendications 1 et 8, caractérisé en ce que, lors de l'utilisation d'un chargeur d'appoint (15) circulant et à deux rangées, l'axe (18) du levier de transfert (19) est fixé rigidement et de façon immobile dans la direction longitudinale (20) du chargeur (1,15).

FIG.1

FIG.2

FIG.3

EP 0 356 616 B1

FIG. 4

# FIG.5

# FIG.6

# FIG.7

# FIG.8